# EUROPEAN PATENT APPLICATION

(11) **EP 4 803 333 A1**
(43) Date of publication of application: **09.09.2026**
(21) Application number: 24884310.4
(22) Date of filing: 24.09.2024
(51) Int. Cl.: B60H 1/00, B60N 3/10

(54) **VEHICLE CONTROL METHOD, CONTROLLER, VEHICLE, AND COMPUTER-READABLE STORAGE MEDIUM**

(30) Priority: 31.10.2023 CN 202311438434
(71) Applicant: BYD Company Limited, Shenzhen, Guangdong 518118 (CN)
(72) Inventor: LIU, Huanyu, Shenzhen, Guangdong 518118 (CN); CAO, Bin, Shenzhen, Guangdong 518118 (CN); MA, Wang, Shenzhen, Guangdong 518118 (CN)
(74) Representative: Mathys & Squire
(86) International application number: PCT/CN2024/120697
(87) International publication number: WO 2025/092303

(57) **Abstract**

A vehicle control method, a controller, a vehicle, and a computer-readable storage medium are provided. The method includes: obtaining a first temperature of a passenger compartment of a vehicle in response to a first instruction for starting an in-vehicle refrigerator through a cloud service; determining whether the first temperature is within an operating temperature range of the in-vehicle refrigerator; controlling, when the first temperature is beyond the operating temperature range, an in-vehicle air conditioner to be turned on, to adjust a temperature of the passenger compartment to be within the operating temperature range; and controlling, when the first temperature is within the operating temperature range, the in-vehicle refrigerator to be turned on.

## Description

This application claims priority to Chinese Patent Application No. 202311438434.5, filed with the China National Intellectual Property Administration on October 31, 2023 and entitled "VEHICLE CONTROL METHOD, CONTROLLER, VEHICLE, AND COMPUTER-READABLE STORAGE MEDIUM", which is incorporated herein by reference in its entirety.

### TECHNICAL FIELD

Embodiments of the present disclosure relate to the field of vehicle technologies, and more specifically, to a vehicle control method, a controller, a vehicle, and a computer-readable storage medium.

### BACKGROUND

With the development of electric vehicle technologies, users have increasingly higher requirements for smarter and more home-oriented in-vehicle products.

In conventional technologies, a user may remotely start an in-vehicle refrigerator through a cloud service. As a result, the refrigerator may run in an adverse condition, which affects performance, reliability, and even service life of the in-vehicle refrigerator.

### SUMMARY

An objective of embodiments of the present disclosure is to provide a new technical solution for controlling an in-vehicle refrigerator to run in an adverse condition.

According to a first aspect of embodiments of the present disclosure, a vehicle control method is provided, including:
obtaining a first temperature of a passenger compartment of a vehicle in response to a first instruction for starting an in-vehicle refrigerator through a cloud service;
determining whether the first temperature is within an operating temperature range of the in-vehicle refrigerator;
controlling, when the first temperature is beyond the operating temperature range, an in-vehicle air conditioner to be turned on, to adjust a temperature of the passenger compartment to be within the operating temperature range; and
controlling, when the first temperature is within the operating temperature range, the in-vehicle refrigerator to be turned on.

Optionally, obtaining the first temperature of the passenger compartment of the vehicle includes:
obtaining temperature data collected by a temperature sensor of the vehicle in a first specified time; and
determining an average temperature value of the passenger compartment in the first specified time based on the temperature data, and using the average temperature value as the first temperature.

Optionally, controlling, when the first temperature is beyond the operating temperature range, the in-vehicle air conditioner to be turned on includes:
when the first temperature is greater than or equal to an upper limit value of the operating temperature range, controlling the in-vehicle air conditioner to run in a cooling mode; and
when the first temperature is less than or equal to a lower limit value of the operating temperature range, controlling the in-vehicle air conditioner to run in a heating mode.

Optionally, controlling, when the first temperature is beyond the operating temperature range, the in-vehicle air conditioner to be turned on includes:
when the first temperature is beyond the operating temperature range, determining a temperature difference between the first temperature and the operating temperature range;
determining a first target value of a first running parameter of the in-vehicle air conditioner based on the temperature difference, wherein the first running parameter includes at least one of a running mode, an air speed, or a running temperature; and
controlling, based on the first target value of the first running parameter, the in-vehicle air conditioner to run.

Optionally, when the in-vehicle refrigerator is turned on, the method further includes:
detecting whether there is a person in the passenger compartment;
determining a second target value of a second running parameter of the in-vehicle refrigerator based on a detection result, wherein the second running parameter includes a compressor rotation speed and/or a fan rotation speed; and
controlling, based on the target value of the second running parameter, the in-vehicle refrigerator to run.

Optionally, the method further includes:
controlling, when the in-vehicle refrigerator enters a delayed power-off mode and a second temperature of the passenger compartment is greater than or equal to the upper limit value of the operating temperature range, the in-vehicle air conditioner to be turned on, to decrease the temperature of the passenger compartment;
determining whether time during which the in-vehicle refrigerator enters the delayed power-off mode reaches specified delayed power-off time; and
when the time during which the in-vehicle refrigerator enters the delayed power-off mode reaches the delayed power-off time, controlling the in-vehicle refrigerator to be turned off.

Optionally, controlling, when the in-vehicle refrigerator enters the delayed power-off mode and the second temperature of the passenger compartment is greater than or equal to the upper limit value of the operating temperature range, the in-vehicle air conditioner to be turned on includes:
when the in-vehicle refrigerator enters the delayed power-off mode and the second temperature is greater than or equal to the upper limit value of the operating temperature range, sending, through the cloud service to a mobile terminal that establishes a connection to the vehicle, a first request for turning on the in-vehicle air conditioner;
when a first response returned by the mobile terminal is received in third specified time after the first request is sent, controlling the in-vehicle air conditioner to be turned on, wherein the first response indicates agreement to turn on the in-vehicle air conditioner; and
when a second response returned by the mobile terminal is received in the third specified time after the first request is sent, or a response returned by the mobile terminal is not received in the third specified time after the first request is sent, controlling the in-vehicle refrigerator to be turned off, wherein the second response indicates disagreement to turn on the in-vehicle air conditioner.

Optionally, the method further includes:
controlling, when the in-vehicle refrigerator enters the delayed power-off mode and the second temperature is less than or equal to the lower limit value of the operating temperature range, the in-vehicle refrigerator to be turned off.

According to a second aspect of the present disclosure, a vehicle control method is further provided, including:
controlling, when an in-vehicle refrigerator enters a delayed power-off mode and a second temperature of a passenger compartment of a vehicle is greater than or equal to an upper limit value of an operating temperature range of the in-vehicle refrigerator, an in-vehicle air conditioner to be turned on, to decrease a temperature of the passenger compartment;
determining whether time during which the in-vehicle refrigerator enters the delayed power-off mode reaches specified delayed power-off time; and
when the time during which the in-vehicle refrigerator enters the delayed power-off mode reaches the delayed power-off time, controlling the in-vehicle refrigerator to be turned off.

Optionally, controlling, when the in-vehicle refrigerator enters the delayed power-off mode and the second temperature of the passenger compartment is greater than or equal to the upper limit value of the operating temperature range, the in-vehicle air conditioner to be turned on includes:
when the in-vehicle refrigerator enters the delayed power-off mode and the second temperature is greater than or equal to the upper limit value of the operating temperature range, sending, through a cloud service to a mobile terminal that establishes a connection to the vehicle, a first request for turning on the in-vehicle air conditioner;
when a first response returned by the mobile terminal is received in third specified time after the first request is sent, controlling the in-vehicle air conditioner to be turned on, wherein the first response indicates agreement to turn on the in-vehicle air conditioner; and
when a second response returned by the mobile terminal is received in the third specified time after the first request is sent, or a response returned by the mobile terminal is not received in the third specified time after the first request is sent, controlling the in-vehicle refrigerator to be turned off, wherein the second response indicates disagreement to turn on the in-vehicle air conditioner.

Optionally, the method further includes:
controlling, when the in-vehicle refrigerator enters the delayed power-off mode and the second temperature is less than or equal to a lower limit value of the operating temperature range, the in-vehicle refrigerator to be turned off.

Optionally, controlling, when the in-vehicle refrigerator enters the delayed power-off mode and the second temperature is less than or equal to the lower limit value of the operating temperature range, the in-vehicle refrigerator to be turned off includes:
when the in-vehicle refrigerator enters the delayed power-off mode and the second temperature is less than or equal to the lower limit value of the operating temperature range, sending, through the cloud service to a mobile terminal that establishes a connection to the vehicle, a second request for turning off the in-vehicle refrigerator; and
when a third response returned by the mobile terminal is received in fourth specified time after the second request is sent, controlling the in-vehicle refrigerator to be turned off, wherein the third response indicates agreement to turn off the in-vehicle refrigerator.

Optionally, the method further includes:
when a fourth response returned by the mobile terminal is received in the fourth specified time after the second request is sent, or a response returned by the mobile terminal is not received in the fourth specified time after the second request is sent, controlling the in-vehicle air conditioner to be turned on.

According to a third aspect of the present disclosure, a controller is further provided, including a processor and a memory. The memory is configured to store a computer program, and the computer program is configured to control the processor to perform the method according to the first aspect of the present disclosure.

According to a fourth aspect of the present disclosure, a vehicle is further provided, including an in-vehicle refrigerator, an in-vehicle air conditioner, and the controller according to the second aspect of the present disclosure.

According to a fifth aspect of the present disclosure, a computer-readable storage medium is further provided. The computer-readable storage medium stores a computer program, and when the computer program is executed by a processor, the method according to the first aspect of the present disclosure is implemented.

According to the embodiments of the present disclosure, when the vehicle receives, through the cloud service, the first instruction for starting the in-vehicle refrigerator, and the first temperature of the passenger compartment of the vehicle is beyond the operating temperature range of the in-vehicle refrigerator, the in-vehicle air conditioner may be controlled to be turned on, to adjust the temperature of the passenger compartment to be within the operating temperature range, and then the in-vehicle refrigerator is controlled to be started. In this way, a compressor of the refrigerator can be prevented from being turned on or running in an adverse condition, to protect the compressor of the in-vehicle refrigerator, and prevent the compressor of the in-vehicle refrigerator from overheating and being damaged, thereby prolonging service life of the in-vehicle refrigerator.

Other features and advantages of the present invention will become clear from the following detailed description of the example embodiments of the present invention with reference to the accompanying drawings.

### BRIEF DESCRIPTION OF DRAWINGS

The accompanying drawings which are incorporated in the specification and constitute a part of the specification illustrate embodiments of the present invention, and are used to explain the principles of the present invention together with the descriptions of the embodiments.
FIG. 1 is a flowchart of a vehicle control method according to an embodiment of the present disclosure;
FIG. 2 is a flowchart of a vehicle control method according to an embodiment of the present disclosure;
FIG. 3 is a flowchart of an example of a vehicle control method according to an embodiment of the present disclosure;
FIG. 4 is a flowchart of another example of a vehicle control method according to an embodiment of the present disclosure;
FIG. 5 is a flowchart of still another example of a vehicle control method according to an embodiment of the present disclosure;
FIG. 6 is a block diagram of a controller according to an embodiment of the present disclosure; and
FIG. 7 is a block diagram of a vehicle according to an embodiment of the present disclosure.

### DESCRIPTION OF EMBODIMENTS

Various example embodiments of the present invention are described now in detail with reference to the accompanying drawings. It will be noted that unless otherwise specifically specified, the relative arrangements, numeric expressions, and values of the components and steps described in these embodiments do not limit the scope of the present invention.

The following descriptions of at least one example embodiment are merely illustrative, and will not be construed as any limitation on the present invention and implementation or use thereof.

Technologies, methods, and devices known to a person of ordinary skill in a related art may not be discussed in detail. However, where appropriate, the technologies, methods, and devices will be considered as a part of the specification.

In all the examples shown and discussed herein, any specific value will be construed as merely an example and not as a limitation. Therefore, other examples of example embodiments may have different values.

It will be noted that similar reference numerals and letters represent similar items in the following accompanying drawings. Therefore, once a specific item is defined in one of the accompanying drawings, no further discussion thereof is required in the subsequent accompanying drawings.

### <Vehicle control method>

The present disclosure provides a vehicle control method. The method may be implemented by a vehicle.

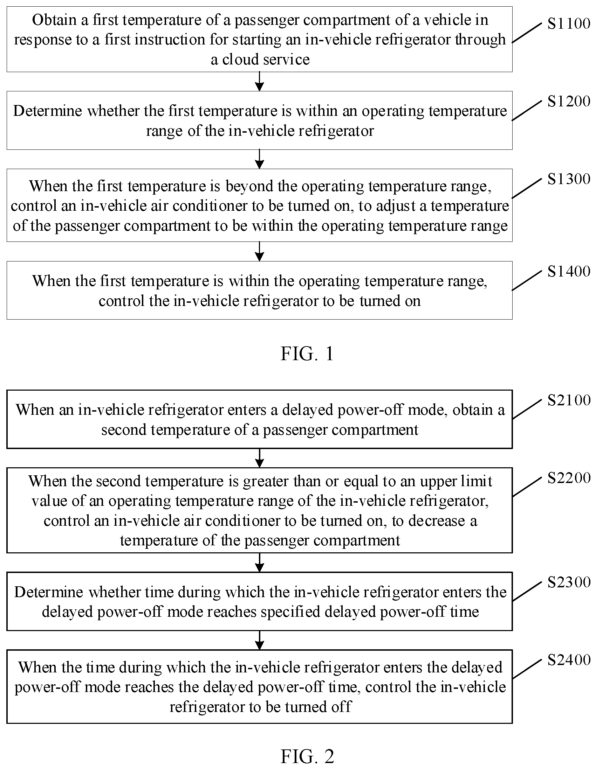

FIG. 1 is a flowchart of a vehicle control method according to an embodiment of the present disclosure.

As shown in FIG. 1, the vehicle control method may include steps S1100 to S1400 shown below.

S1100: obtain a first temperature of a passenger compartment of a vehicle in response to a first instruction for starting an in-vehicle refrigerator through a cloud service.

In this embodiment, the first instruction may be triggered by a mobile terminal that establishes a connection to the vehicle through the cloud service.

In an embodiment, the mobile terminal may establish a connection to the vehicle by way of a cellular network, Wi-Fi, Bluetooth, or the like. Alternatively, the mobile terminal may log in by logging in to an account of the vehicle, so that a connection is established between the mobile terminal and the vehicle that log in to a same account.

Further, the mobile terminal may provide a first button used to trigger the first instruction. The mobile terminal sends, to the vehicle through the cloud service in response to a tap operation performed on the first button, the first instruction for starting the in-vehicle refrigerator. Alternatively, when receiving a speech instruction, sent by a user, for starting the in-vehicle refrigerator, the mobile terminal may send, to the vehicle through the cloud service, the first instruction for starting the in-vehicle refrigerator.

Still further, the mobile terminal may be an electronic product such as a mobile phone, a smart watch, a smart band, smart glasses, a headset, or a computer, or may be a vehicle key.

In an embodiment of the present disclosure, obtaining the first temperature of the passenger compartment of the vehicle may include: obtaining temperature data collected by a temperature sensor of the vehicle in first specified time; and determining an average temperature value of the passenger compartment in the first specified time based on the temperature data, and using the average temperature value as the first temperature.

In this embodiment, the temperature sensor may be disposed in the passenger compartment to detect a temperature of the passenger compartment.

Further, the first specified time may be a time period before the first temperature of the passenger compartment of the vehicle is obtained, and duration of the first specified time may be preset based on an application scenario or a specific requirement. For example, the first specified time may be within three minutes before the first temperature of the passenger compartment of the vehicle is obtained.

In this embodiment, the average temperature value of the passenger compartment in the first specified time is determined based on the temperature data collected by the temperature sensor in the first specified time, and is used as the first temperature, so that the obtained first temperature can be more precise, and subsequent control of the in-vehicle refrigerator and/or an in-vehicle air conditioner is also more precise.

In another embodiment of the present disclosure, obtaining the first temperature of the passenger compartment of the vehicle may include: obtaining the first temperature based on latest temperature data collected by the temperature sensor of the vehicle.

In this embodiment, the first temperature represents a latest detected temperature of the passenger compartment when the vehicle performs step S1100.

Step S1200: determine whether the first temperature is within an operating temperature range of the in-vehicle refrigerator.

In this embodiment, the operating temperature range of the in-vehicle refrigerator may be preset based on an application scenario or a specific requirement.

For example, the operating temperature range of the in-vehicle refrigerator may be [-10°C to 60°C]. In this case, when the first temperature is less than -10°C or greater than 60°C, it may be determined that the first temperature is beyond the operating temperature range of the in-vehicle refrigerator; and when the first temperature is greater than or equal to -10°C and less than or equal to 60°C, it is determined that the first temperature is within the operating temperature range of the in-vehicle refrigerator.

For another example, the operating temperature range of the in-vehicle refrigerator may be [-10°C to 60°C). In this case, when the first temperature is less than -10°C or is greater than or equal to 60°C, it may be determined that the first temperature is beyond the operating temperature range of the in-vehicle refrigerator; and when the first temperature is greater than or equal to -10°C and is less than 60°C, it is determined that the first temperature is within the operating temperature range of the in-vehicle refrigerator.

Step S1300: when the first temperature is beyond the operating temperature range, control an in-vehicle air conditioner to be turned on, to adjust a temperature of the passenger compartment to be within the operating temperature range.

In this embodiment, in a running process of the in-vehicle air conditioner, the first temperature of the passenger compartment of the vehicle continues to be obtained at a specified temperature obtaining frequency, and it is determined whether the first temperature is within the operating temperature range of the in-vehicle refrigerator, until the first temperature is within the operating temperature range, and S1400 is performed.

In an embodiment of the present disclosure, that when the first temperature is beyond the operating temperature range, the in-vehicle air conditioner is controlled to be turned on may include: when the first temperature is greater than or equal to an upper limit value of the operating temperature range, controlling the in-vehicle air conditioner to run in a cooling mode; and when the first temperature is less than or equal to a lower limit value of the operating temperature range, controlling the in-vehicle air conditioner to run in a heating mode.

For example, the operating temperature range of the in-vehicle refrigerator may be [-10°C to 60°C]. In this case, the upper limit value of the operating temperature range may be 60°C, and the lower limit value of the operating temperature range may be -10°C.

When the first temperature is greater than or equal to the upper limit value of the operating temperature range, it indicates that the temperature of the passenger compartment is excessively high, and the temperature of the passenger compartment needs to be decreased. Therefore, the in-vehicle air conditioner may be controlled to run in the cooling mode.

When the first temperature is less than or equal to the lower limit value of the operating temperature range, it indicates that the temperature of the passenger compartment is excessively low, and the temperature of the passenger compartment needs to be increased. Therefore, the in-vehicle air conditioner may be controlled to run in the heating mode.

According to this embodiment, the temperature of the passenger compartment may be adjusted to be within the operating temperature range.

In another embodiment of the present disclosure, that when the first temperature is beyond the operating temperature range, the in-vehicle air conditioner is controlled to be turned on may alternatively include: when the first temperature is beyond the operating temperature range, determining a temperature difference between the first temperature and the operating temperature range; determining a first target value of a first running parameter of the in-vehicle air conditioner based on the temperature difference; and controlling, based on the first target value of the first running parameter, the in-vehicle air conditioner to run. The first running parameter includes at least one of a running mode, an air speed, or a running temperature.

In this embodiment, the determining a temperature difference between the first temperature and the operating temperature range may be determining a temperature difference between the first temperature and the upper limit value or the lower limit value of the operating temperature range.

Specifically, the temperature difference between the first temperature and the upper limit value of the operating temperature range may be determined when the first temperature is greater than or equal to the upper limit value of the operating temperature range, and the temperature difference between the first temperature and the lower limit value of the operating temperature range may be determined when the first temperature is less than or equal to the lower limit value of the operating temperature range.

In an embodiment of the present disclosure, first mapping data reflecting a mapping relationship between the temperature difference and the air speed of the in-vehicle air conditioner in the heating mode, second mapping data reflecting a mapping relationship between the temperature difference and the running temperature of the in-vehicle air conditioner in the heating mode, third mapping data reflecting a mapping relationship between the temperature difference and the air speed of the in-vehicle air conditioner in the cooling mode, and fourth mapping data reflecting a mapping relationship between the temperature difference and the running temperature of the in-vehicle air conditioner in the cooling mode may be pre-established.

In this embodiment, the first mapping data may be a first mapping function, a first reference table, or the like. This is not limited herein.

For the first mapping function, a dependent variable of the first mapping function is the air speed, and an independent variable is the temperature difference. In this way, the temperature difference between the first temperature and the operating temperature range may be substituted into the first mapping function to obtain an air speed value corresponding to the temperature difference, and the air speed value is used as the first target value of the air speed.

For the first reference table, the air speed value corresponding to the temperature difference may be found in the first reference table, and is used as the first target value of the air speed. If the temperature difference cannot be directly found in the first reference table, two values adjacent to the temperature difference may be found, and the air speed value corresponding to the temperature difference is obtained by using an interpolation method based on the two values and air speed values respectively corresponding to the two values, and is used as the first target value of the air speed.

In this embodiment, the second mapping data may be a second mapping function, a second reference table, or the like. This is not limited herein.

For the second mapping function, a dependent variable of the second mapping function is the running temperature, and an independent variable is the temperature difference. In this way, the temperature difference between a second temperature and the operating temperature range may be substituted into the second mapping function to obtain a running temperature value corresponding to the temperature difference, and the running temperature value is used as the first target value of the running temperature.

For the second reference table, the running temperature value corresponding to the temperature difference may be found in the second reference table, and is used as the first target value of the running temperature. If the temperature difference cannot be directly found in the second reference table, two values adjacent to the temperature difference may be searched for, and the running temperature value corresponding to the temperature difference is obtained by using an interpolation method based on the two values and running temperature values respectively corresponding to the two values, and is used as the first target value of the running temperature.

In this embodiment, the third mapping data may be a third mapping function, a third reference table, or the like. This is not limited herein.

For the third mapping function, a dependent variable of the third mapping function is the air speed, and an independent variable is the temperature difference. In this way, the temperature difference between a third temperature and the operating temperature range may be substituted into the third mapping function to obtain an air speed value corresponding to the temperature difference, and the air speed value is used as the first target value of the air speed.

For the third reference table, the air speed value corresponding to the temperature difference may be found in the third reference table, and is used as the first target value of the air speed. If the temperature difference cannot be directly found in the third reference table, two values adjacent to the temperature difference may be found, and the air speed value corresponding to the temperature difference is obtained by using an interpolation method based on the two values and air speed values respectively corresponding to the two values, and is used as the first target value of the air speed.

In this embodiment, the fourth mapping data may be a fourth mapping function, a fourth reference table, or the like. This is not limited herein.

For the fourth mapping function, a dependent variable of the fourth mapping function is the running temperature, and an independent variable is the temperature difference. In this way, the temperature difference between a fourth temperature and the operating temperature range may be substituted into the fourth mapping function to obtain a running temperature value corresponding to the temperature difference, and the running temperature value is used as the first target value of the running temperature.

For the fourth reference table, the running temperature value corresponding to the temperature difference may be found in the fourth reference table, and is used as the first target value of the running temperature. If the temperature difference cannot be directly found in the fourth reference table, two values adjacent to the temperature difference may be found, and the running temperature value corresponding to the temperature difference is obtained by using an interpolation method based on the two values and running temperature values respectively corresponding to the two values, and is used as the first target value of the running temperature.

Further, in the heating mode, a larger temperature difference may indicate a larger corresponding air speed of the in-vehicle air conditioner, and a lower corresponding running temperature of the in-vehicle air conditioner. In the cooling mode, a larger temperature difference may indicate a larger corresponding air speed of the in-vehicle air conditioner, and a higher corresponding running temperature of the in-vehicle air conditioner.

Still further, in a case that the temperature difference between the first temperature and the operating temperature range is obtained, when the temperature difference is a positive number, the air speed of the in-vehicle air conditioner may be obtained based on the temperature difference and the third mapping data, and the running temperature of the in-vehicle air conditioner may be obtained based on the temperature difference and the fourth mapping data; and when the temperature difference is a negative number, the air speed of the in-vehicle air conditioner may be obtained based on the temperature difference and the first mapping data, and the running temperature of the in-vehicle air conditioner may be obtained based on the temperature difference and the second mapping data.

In an embodiment of the present disclosure, that the in-vehicle air conditioner is controlled based on the first target value of the first running parameter to run may be adjusting the first running parameter of the in-vehicle air conditioner to the corresponding first target value, so that the in-vehicle air conditioner runs when the first running parameter is the corresponding first target value.

Step S1400: when the first temperature is within the operating temperature range, control the in-vehicle refrigerator to be turned on.

In this embodiment, when the in-vehicle refrigerator is controlled to be turned on, a compressor of the in-vehicle refrigerator is started to run, to implement a corresponding cooling function.

In this embodiment of the present disclosure, when the vehicle receives, through the cloud service, the first instruction for starting the in-vehicle refrigerator, and the first temperature of the passenger compartment of the vehicle is beyond the operating temperature range of the in-vehicle refrigerator, the in-vehicle air conditioner may be controlled to be turned on, to adjust the temperature of the passenger compartment to be within the operating temperature range, and then the in-vehicle refrigerator is controlled to be started. In this way, the compressor of the refrigerator can be prevented from being turned on or running in an adverse condition, to protect the compressor of the in-vehicle refrigerator, and prevent the compressor of the in-vehicle refrigerator from overheating and being damaged, thereby prolonging the service life of the in-vehicle refrigerator.

In an embodiment of the present disclosure, when the in-vehicle refrigerator is turned on, the method may further include: detecting whether there is a person in the passenger compartment; determining a second target value of a second running parameter of the in-vehicle refrigerator based on a detection result; and controlling, based on the second target value of the second running parameter, the in-vehicle refrigerator to run. The second running parameter may include a compressor rotation speed and/or a fan rotation speed.

Further, detecting whether there is a person in the passenger compartment may comprise detecting whether there is a person on each seat in the passenger compartment.

In an example, a pressure sensor may be disposed on a seat in the passenger compartment. When a pressure detected by the pressure sensor on a seat is greater than or equal to a specified pressure threshold, it is determined that there is a person on the seat; otherwise, it is determined that there is no person on the seat.

In another example, a distance sensor may be disposed on a seat in the passenger compartment. When a distance detected by the distance sensor on a seat is greater than or equal to a specified distance threshold, it is determined that there is a person on the seat; otherwise, it is determined that there is no person on the seat.

In an embodiment of the present disclosure, a first value of the second running parameter of the in-vehicle refrigerator when there is a person in the passenger compartment, and a second value of the second running parameter of the in-vehicle refrigerator when there is no person in the passenger compartment may be preset.

Further, a first value of the compressor rotation speed of the in-vehicle refrigerator when there is a person in the passenger compartment may be less than or equal to a second value of the compressor rotation speed of the in-vehicle refrigerator when there is no person in the passenger compartment, and a first value of the fan rotation speed of the in-vehicle refrigerator when there is a person in the passenger compartment may be less than or equal to a second value of the fan rotation speed of the in-vehicle refrigerator when there is no person in the passenger compartment.

When there is a person in the passenger compartment, the first value of the second running parameter of the in-vehicle refrigerator when there is a person in the passenger compartment may be determined as the second target value. When there is no person in the passenger compartment, the second value of the second running parameter of the in-vehicle refrigerator when there is no person in the passenger compartment may be determined as the second target value.

In this embodiment, that the in-vehicle refrigerator is controlled based on the second target value of the second running parameter to run may be adjusting the second running parameter of the in-vehicle refrigerator to the corresponding second target value, so that the in-vehicle refrigerator runs when the second running parameter is the corresponding second target value.

According to this embodiment, when there is a person in the passenger compartment, the in-vehicle refrigerator can be prevented from having relatively high running noise to cause interference to the person in the passenger compartment; and when there is no person in the passenger compartment, the in-vehicle refrigerator can rapidly achieve a preset cooling effect.

In an embodiment of the present disclosure, the method may further include steps S2100 to S2300 shown in FIG. 2.

Step S2100: when an in-vehicle refrigerator enters a delayed power-off mode and a second temperature of a passenger compartment is greater than or equal to an upper limit value of an operating temperature range of the in-vehicle refrigerator, control an in-vehicle air conditioner to be turned on, to decrease a temperature of the passenger compartment.

In this embodiment, before step S2100 is performed, it may be determined whether the in-vehicle refrigerator enters the delayed power-off mode, and whether the second temperature of the passenger compartment is greater than or equal to the upper limit value of the operating temperature range of the in-vehicle refrigerator.

Based on this, it may be first determined whether the in-vehicle refrigerator enters the delayed power-off mode, and when it is determined that the in-vehicle refrigerator enters the delayed power-off mode, it is determined whether the second temperature of the passenger compartment is greater than or equal to the upper limit value of the operating temperature range of the in-vehicle refrigerator. Alternatively, it may be first determined whether the second temperature of the passenger compartment is greater than or equal to the upper limit value of the operating temperature range of the in-vehicle refrigerator, and when it is determined that the second temperature is greater than or equal to the upper limit value of the operating temperature range of the in-vehicle refrigerator, it is further determined whether the in-vehicle refrigerator enters the delayed power-off mode. Alternatively, it may be simultaneously determined whether the in-vehicle refrigerator enters the delayed power-off mode, and whether the second temperature of the passenger compartment is greater than or equal to the upper limit value of the operating temperature range of the in-vehicle refrigerator.

In an embodiment of the present disclosure, the in-vehicle refrigerator may enter the delayed power-off mode when a vehicle is shut down.

In another embodiment of the present disclosure, in response to a second instruction for controlling, through a cloud service, the in-vehicle refrigerator to enter the delayed power-off mode, the vehicle may control the in-vehicle refrigerator to enter the delayed power-off mode. Specifically, a second button used to trigger the second instruction may be disposed in a mobile terminal that establishes a connection to the vehicle. The mobile terminal sends the second instruction to the vehicle through the cloud service in response to a triggering operation performed by a user on the second button. Alternatively, the mobile terminal may send the second instruction to the vehicle through the cloud service when receiving a speech instruction, sent by a user, for controlling the in-vehicle refrigerator to enter the delayed power-off mode.

In an embodiment of the present disclosure, before it is determined whether the second temperature of the passenger compartment is greater than or equal to the upper limit value of the operating temperature range of the in-vehicle refrigerator, the method may further include a step of obtaining the second temperature of the passenger compartment of the vehicle, which may specifically include: obtaining temperature data collected by a temperature sensor of the vehicle in a second specified time; and determining an average temperature value of the passenger compartment in the second specified time based on the temperature data, and using the average temperature value as the second temperature.

In this embodiment, the temperature sensor may be disposed in the passenger compartment to detect a temperature of the passenger compartment.

Further, the second specified time may be a time period before the second temperature of the passenger compartment of the vehicle is obtained, and duration of the second specified time may be preset based on an application scenario or a specific requirement. For example, the second specified time may be within three minutes before the second temperature of the passenger compartment of the vehicle is obtained.

In this embodiment, the average temperature value of the passenger compartment in the second specified time is determined based on the temperature data collected by the temperature sensor in the second specified time, and is used as the second temperature, so that the obtained second temperature can be more precise, and subsequent control of the in-vehicle refrigerator and/or the in-vehicle air conditioner is also more precise.

Still further, a method of obtaining the second temperature may be the same as or different from a method of obtaining the first temperature. This is not limited herein.

When the in-vehicle refrigerator is in the delayed power-off mode and the second temperature is greater than or equal to the upper limit value of the operating temperature range of the in-vehicle refrigerator, it indicates that the temperature of the passenger compartment is excessively high, which may affect performance of a compressor of the in-vehicle refrigerator. Therefore, the in-vehicle air conditioner may be controlled to run in a cooling mode to decrease the temperature of the passenger compartment, thereby decreasing a temperature of the compressor of the in-vehicle refrigerator in running to protect the compressor, to prevent the compressor from running in an adverse condition with a high temperature.

In an embodiment of the present disclosure, when the in-vehicle refrigerator enters the delayed power-off mode and the second temperature is greater than or equal to the upper limit value of the operating temperature range, the in-vehicle air conditioner is directly controlled to be turned on.

In another embodiment of the present disclosure, that when the in-vehicle refrigerator enters the delayed power-off mode and the second temperature is greater than or equal to the upper limit value of the operating temperature range, the in-vehicle air conditioner is controlled to be turned on includes: when the in-vehicle refrigerator enters the delayed power-off mode and the second temperature is greater than or equal to the upper limit value of the operating temperature range, sending, through the cloud service to a mobile terminal that establishes a connection to the vehicle, a first request for turning on the in-vehicle air conditioner; when a first response returned by the mobile terminal is received in third specified time after the first request is sent, controlling the in-vehicle air conditioner to be turned on, where the first response indicates agreement to turn on the in-vehicle air conditioner; and when a second response returned by the mobile terminal is received in the third specified time after the first request is sent, or a response returned by the mobile terminal is not received in the third specified time after the first request is sent, controlling the in-vehicle refrigerator to be turned off.

The third specified time may be preset based on an application scenario or a specific requirement. For example, the third specified time may be 10 seconds or 30 seconds.

In this embodiment, when receiving the first request, the mobile terminal displays first prompt information corresponding to the first request, where the first prompt information is information prompting a user whether to turn on the in-vehicle air conditioner.

When receiving the first prompt information and agreeing to turn on the air conditioner, the user may tap a third button provided on the mobile terminal or enter a speech instruction for agreeing to turn on the air conditioner, to trigger the mobile terminal to return the first response to the vehicle. When receiving the first prompt information and disagreeing to turn on the air conditioner, the user may tap a fourth button provided on the mobile terminal or enter a speech instruction for disagreeing to turn on the air conditioner, to trigger the mobile terminal to return the second response to the vehicle.

When receiving, in the third specified time after the first request is sent, the first response returned by the mobile terminal, the vehicle controls the in-vehicle air conditioner to be turned on; when receiving, in the third specified time after the first request is sent, the second response returned by the mobile terminal, the vehicle controls the in-vehicle refrigerator to be turned off; and when the vehicle does not receive, in the third specified time after the first request is sent, the first response or the second response returned by the mobile terminal, the vehicle controls the in-vehicle refrigerator to be turned off.

When the first response is received in the third specified time after the vehicle sends the first request, the in-vehicle air conditioner is controlled to be turned on, to decrease the temperature of the passenger compartment; and when the second response is received or a response returned by the mobile terminal is not received in the third specified time after the vehicle sends the first request, the in-vehicle refrigerator may be controlled to be directly turned off, and subsequent steps S2200 and S2300 do not need to be performed, to avoid impact caused by an adverse condition on the compressor of the in-vehicle refrigerator, to protect the compressor of the in-vehicle refrigerator, and prevent the compressor of the in-vehicle refrigerator from overheating and being damage, thereby prolonging the service life of the in-vehicle refrigerator.

Step S2200: determine whether time during which the in-vehicle refrigerator enters the delayed power-off mode reaches specified delayed power-off time.

In this embodiment, the delayed power-off time may be preset based on an application scenario or a specific requirement. For example, the delayed power-off time may be 10 minutes or half an hour. The delayed power-off time may be fixed and remain unchanged, or may be set by a user by using a central control screen or a mobile terminal.

Further, timing may start from time when the in-vehicle refrigerator enters the delayed power-off mode, and timing time represents the time during which the in-vehicle refrigerator enters the delayed power-off mode.

Still further, when the time during which the in-vehicle refrigerator enters the delayed power-off mode is less than the delayed power-off time, it may be determined that the time during which the in-vehicle refrigerator enters the delayed power-off mode does not reach the delayed power-off time. When the time during which the in-vehicle refrigerator enters the delayed power-off mode is greater than or equal to the delayed power-off time, it may be determined that the time during which the in-vehicle refrigerator enters the delayed power-off mode reaches the delayed power-off time.

Step S2300: when the time during which the in-vehicle refrigerator enters the delayed power-off mode reaches the delayed power-off time, control the in-vehicle refrigerator to be turned off.

According to this embodiment, a delayed power-off function of the in-vehicle refrigerator may be implemented. In addition, when the in-vehicle refrigerator enters the delayed power-off mode, the compressor of the in-vehicle refrigerator may be protected, to avoid impact caused by an adverse condition on the compressor of the in-vehicle refrigerator, and prevent the compressor of the in-vehicle refrigerator from overheating and being damaged, thereby prolonging the service life of the in-vehicle refrigerator.

Further, when the time during which the in-vehicle refrigerator enters the delayed power-off mode does not reach the delayed power-off time, the in-vehicle air conditioner may keep running in the cooling mode, until the time during which the in-vehicle refrigerator enters the delayed power-off mode reaches the delayed power-off time.

In an embodiment of the present disclosure, when the in-vehicle refrigerator enters the delayed power-off mode and the second temperature is less than or equal to a lower limit value of the operating temperature range of the in-vehicle refrigerator, the in-vehicle refrigerator is controlled to be turned off.

When the in-vehicle refrigerator is in the delayed power-off mode, if the temperature of the passenger compartment decreases excessively fast, causing the time during which the in-vehicle refrigerator enters the delayed power-off mode not reaching the specified delayed power-off time, and the second temperature being less than or equal to the lower limit value of the operating temperature range of the in-vehicle refrigerator, the in-vehicle refrigerator may be controlled to be turned off, to reduce power consumption of the in-vehicle refrigerator.

In an embodiment of the present disclosure, when the in-vehicle refrigerator enters the delayed power-off mode and the second temperature is less than or equal to the lower limit value of the operating temperature range of the in-vehicle refrigerator, the vehicle directly controls the in-vehicle refrigerator to be turned off.

In another embodiment of the present disclosure, that when the in-vehicle refrigerator enters the delayed power-off mode and the second temperature is less than or equal to the lower limit value of the operating temperature range, the in-vehicle refrigerator is controlled to be turned off may include: when the second temperature is less than or equal to the lower limit value of the operating temperature range, sending, to a mobile terminal through the cloud service, a second request for turning off the in-vehicle refrigerator; and when a third response returned by the mobile terminal is received in fourth specified time after the second request is sent, controlling the in-vehicle refrigerator to be turned off, where the third response indicates agreement to turn off the in-vehicle refrigerator.

Further, the method may further include: when a returned fourth response is received in the fourth specified time after the second request is sent, or a response returned by the mobile terminal is not received in the fourth specified time after the second request is sent, controlling the in-vehicle air conditioner to be turned on, and continuing to perform step S2200 and step S2300. The fourth response indicates disagreement to turn off the in-vehicle refrigerator.

The fourth specified time may be preset based on an application scenario or a specific requirement. For example, the fourth specified time may be 10 seconds or 30 seconds.

In this embodiment, when receiving the second request, the mobile terminal displays second prompt information corresponding to the second request, where the second prompt information is information prompting a user whether to turn off the in-vehicle refrigerator.

When receiving the second prompt information and agreeing to turn off the refrigerator, the user may tap a third button provided on the mobile terminal or enter a speech instruction for agreeing to turn off the refrigerator, to trigger the mobile terminal to return the third response to the vehicle. When receiving the second prompt information and disagreeing to turn off the refrigerator, the user may tap a fourth button provided on the mobile terminal or enter a speech instruction for disagreeing to turn off the refrigerator, to trigger the mobile terminal to return the fourth response to the vehicle.

When receiving, in the fourth specified time after the second request is sent, the third response returned by the mobile terminal, the vehicle controls the in-vehicle refrigerator to be turned off; when receiving, in the fourth specified time after the second request is sent, the fourth response returned by the mobile terminal, the vehicle controls the in-vehicle refrigerator to be turned off; and when the vehicle does not receive, in the fourth specified time after the second request is sent, the third response or the fourth response returned by the mobile terminal, the vehicle performs step S2200 at a specified frequency, until the time during which the in-vehicle refrigerator enters the delayed power-off mode reaches the delayed power-off time, and then performs step S2300.

When the third response is received in the fourth specified time after the vehicle sends the second request, the in-vehicle refrigerator is controlled to be turned off, to reduce power consumption of the in-vehicle refrigerator; and when the fourth response is received or a response returned by the mobile terminal is not received in the fourth specified time after the vehicle sends the second request, the in-vehicle air conditioner may be controlled to be turned on, to increase the temperature of the passenger compartment, and prevent the compressor from running in an adverse condition with an extremely low temperature, thereby protecting the compressor of the in-vehicle refrigerator. In addition, when the fourth response is received or a response returned by the mobile terminal is not received in the fourth specified time after the vehicle sends the second request, the vehicle further performs step S2200 at a specified frequency, until the time during which the in-vehicle refrigerator enters the delayed power-off mode reaches the delayed power-off time, and then performs step S2300, to implement the delayed power-off function of the in-vehicle refrigerator.

### <Example 1>

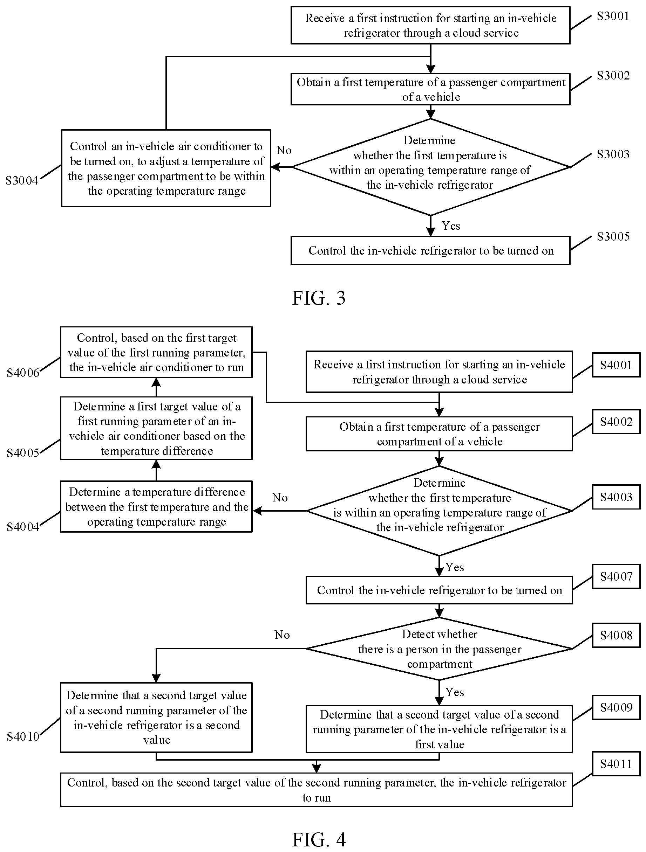

FIG. 3 is a flowchart of an example of a vehicle control method according to an embodiment of the present disclosure.

As shown in FIG. 3, the vehicle control method may include steps S3001 to S3005 shown below.

Step S3001: receive a first instruction for starting an in-vehicle refrigerator through a cloud service.

Step S3002: obtain a first temperature of a passenger compartment of a vehicle.

Step S3003: determine whether the first temperature is within an operating temperature range of the in-vehicle refrigerator; and if no, perform step S3004, or if yes, perform step S3005.

Step S3004: control an in-vehicle air conditioner to be turned on, to adjust a temperature of the passenger compartment to be within the operating temperature range.

Step S3005: control the in-vehicle refrigerator to be turned on.

### <Example 2>

FIG. 4 is a flowchart of an example of a vehicle control method according to an embodiment of the present disclosure.

As shown in FIG. 4, the vehicle control method may include steps S4001 to S4011 shown below.

Step S4001: receive a first instruction for starting an in-vehicle refrigerator through a cloud service.

Step S4002: obtain a first temperature of a passenger compartment of a vehicle.

Step S4003: determine whether the first temperature is within an operating temperature range of the in-vehicle refrigerator; and if no, perform step S4004, or if yes, perform step S4007.

Step S4004: determine a temperature difference between the first temperature and the operating temperature range.

Step S4005: determine a first target value of a first running parameter of an in-vehicle air conditioner based on the temperature difference.

Step S4006: control, based on the first target value of the first running parameter, the in-vehicle air conditioner to run.

Step S4007: control the in-vehicle refrigerator to be turned on.

Step S4008: detect whether there is a person in the passenger compartment; and if yes, perform step S4009, or if no, perform step S4010.

Step S4009: determine that a second target value of a second running parameter of the in-vehicle refrigerator is a first value.

Step S4010: determine that a second target value of a second running parameter of the in-vehicle refrigerator is a second value.

Step S4011: control, based on the second target value of the second running parameter, the in-vehicle refrigerator to run.

### <Example 3>

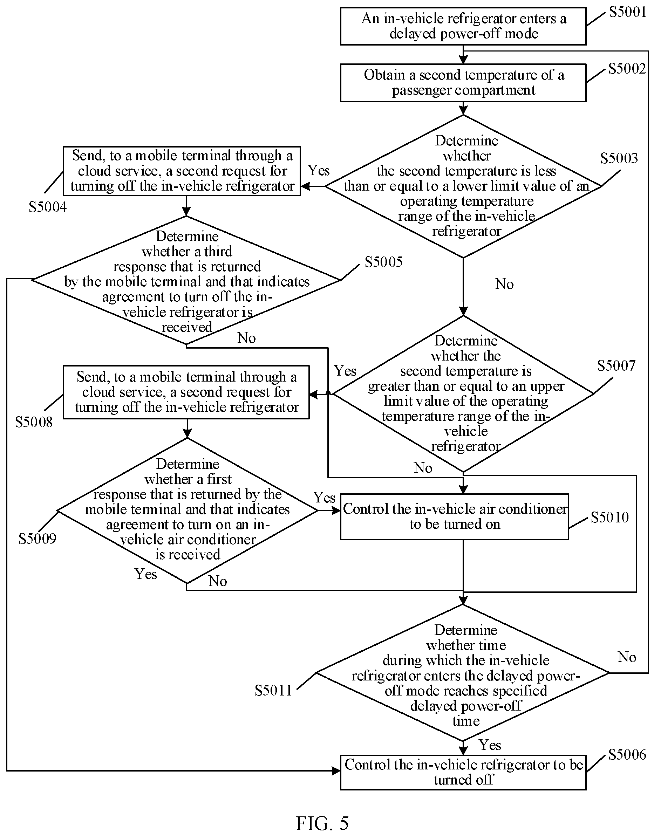

FIG. 5 is a flowchart of an example of a vehicle control method according to an embodiment of the present disclosure.

As shown in FIG. 5, the vehicle control method may include steps S5001 to S5011 shown below.

Step S5001: an in-vehicle refrigerator enters a delayed power-off mode.

Step S5002: obtain a second temperature of a passenger compartment.

In this embodiment of the present disclosure, step S5001 may be performed first, and then step S5002 may be performed; or step S5002 may be performed first, and then step S5001 may be performed; or step S5001 and step S5002 may be performed simultaneously. An execution sequence of step S5001 and step S5002 is not limited in this embodiment.

Step S5003: determine whether the second temperature is less than or equal to a lower limit value of an operating temperature range of the in-vehicle refrigerator; and if yes, perform step S5004, or if no, perform step S5007.

Step S5004: send, to a mobile terminal through a cloud service, a second request for turning off the in-vehicle refrigerator.

Step S5005: determine whether a third response returned by the mobile terminal that indicates agreement to turn off the in-vehicle refrigerator is received; and if yes, perform step S5006, or if no, perform step S5010.

Step S5006: control the in-vehicle refrigerator to be turned off.

Step S5007: determine whether the second temperature is greater than or equal to an upper limit value of the operating temperature range of the in-vehicle refrigerator; and if yes, perform step S5008, or if no, perform step S5011.

Step S5008: send, through a cloud service to a mobile terminal that establishes a connection to a vehicle, a first request for turning on an in-vehicle air conditioner.

Step S5009: determine whether a first response returned by the mobile terminal that indicates agreement to turn on the in-vehicle air conditioner is received; and if yes, perform step S5010, or if no, perform step S5011.

Step S5010: control the in-vehicle air conditioner to be turned on.

Step S5011: determine whether time during which the in-vehicle refrigerator enters the delayed power-off mode reaches specified delayed power-off time; and if yes, perform step S5006, or if no, continue to perform step S5002.

### <Controller>

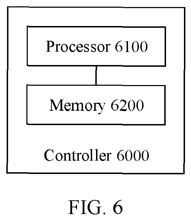

The present disclosure further provides a controller. As shown in FIG. 6, the controller 6000 may include a processor 6100 and a memory 6200. The memory 6200 is configured to store a computer program, and the computer program is configured to control the processor 6100 to perform the method described in any embodiment of the present disclosure.

### <Vehicle>

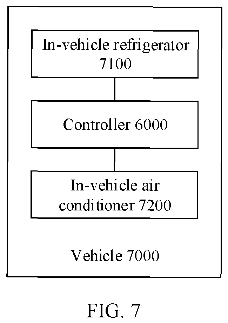

The present disclosure further provides a vehicle. As shown in FIG. 7, the vehicle 7000 may include an in-vehicle refrigerator 7100, an in-vehicle air conditioner 7200, and the controller 6000 described in the foregoing embodiment of the present disclosure.

### <Computer-readable storage medium>

The present disclosure further provides a computer-readable storage medium. The computer-readable storage medium stores a computer program, and when the computer program is executed by a processor, the method described in any embodiment of the present disclosure is implemented.

The present disclosure may be a system, a method, and/or a computer program product. The computer program product may include a computer-readable storage medium, and the computer-readable storage medium carries computer-readable program instructions used by the processor to perform the aspects of the present disclosure.

The computer-readable storage medium may be a tangible device that can keep and store instructions used by an instruction execution device. The computer-readable storage medium may be, for example, but is not limited to an electrical storage device, a magnetic storage device, an optical storage device, an electromagnetic storage device, a semiconductor storage device, or any proper combination thereof. More specific examples (non-exhaustive examples) of the computer-readable storage medium include a portable computer disk, a hard disk, a random access memory (RAM), a read-only memory (ROM), an erasable programmable read-only memory (EPROM or a flash memory), a static random access memory (SRAM), a portable compact disk read-only memory (CD-ROM), a digital versatile disk (DVD), a memory stick, a floppy disk, a mechanical coding device, a punch card or a protruding structure in a groove on which instructions are stored, and any proper combination thereof. The computer-readable storage medium used herein is not interpreted as a transient signal, such as a radio wave or another freely propagated electromagnetic wave, an electromagnetic wave propagated through a waveguide or another transmission medium (for example, an optical pulse through a fiber cable), or an electrical signal transmitted through a wire.

The computer-readable program instructions described herein may be downloaded from the computer-readable storage medium to various computing/processing devices, or to an external computer or an external storage device through a network, for example, the Internet, a local area network, a wide area network, and/or a wireless network. The network may include a copper transmission cable, fiber transmission, wireless transmission, a router, a firewall, a switch, a gateway computer, and/or an edge server. A network adapter or a network interface in each computing/processing device receives the computer-readable program instructions from the network and forwards the computer-readable program instructions, to store the computer-readable program instructions in the computer-readable storage medium in each computing/processing device.

The computer program instructions used to perform the operations of the present disclosure may be assembly instructions, instruction set architecture (ISA) instructions, machine instructions, machine-related instructions, microcode, firmware instructions, status setting data, or source code or target code written in any combination of one or more programming languages. The programming languages include object-oriented programming languages such as Smalltalk and C++, and conventional procedural programming languages such as a "C" language or a similar programming language. The computer-readable program instructions may be completely executed on a user computer, partially executed on a user computer, executed as a separate software package, partially executed on a user computer and partially executed on a remote computer, or completely executed on a remote computer or server. In a case involving a remote computer, the remote computer may be connected to a user computer through any type of network, including a local area network (LAN) or a wide area network (WAN), or may be connected to an external computer (for example, through the Internet by using an Internet service provider). In some embodiments, an electronic circuit, for example, a programmable logic circuit, a field programmable gate array (FPGA), or a programmable logic array (PLA), may be customized by using status information of the computer-readable program instructions. The electronic circuit may execute the computer-readable program instructions to implement the aspects of the present disclosure.

Various aspects of the present disclosure are described herein with reference to the flowcharts and/or the block diagrams of the method, the apparatus (system), and the computer program product according to embodiments of the present disclosure. It will be understood that the computer-readable program instructions may be used to implement each block in the flowcharts and/or the block diagrams and a combination of blocks in the flowcharts and/or the block diagrams.

These computer-readable program instructions may be provided to a general-purpose computer, a dedicated computer, or a processor of another programmable data processing apparatus to generate a machine, so that an apparatus for implementing a specified function/action in one or more blocks in the flowcharts and/or the block diagrams is generated when these instructions are executed by the computer or the processor of another programmable data processing apparatus. Alternatively, these computer-readable program instructions may be stored in the computer-readable storage medium. These instructions enable a computer, a programmable data processing apparatus, and/or another device to operate in a specific manner. Therefore, the computer-readable medium storing the instructions includes a product, and the product includes instructions for implementing various aspects of a specified function/action in one or more blocks in the flowcharts and/or the block diagrams.

Alternatively, the computer-readable program instructions may be loaded onto a computer, another programmable data processing apparatus, or another device, so that a series of operations and steps are performed on the computer, another programmable data processing apparatus, or another device, to generate a computer-implemented process, so that the instructions executed on the computer, another programmable data processing apparatus, or another device implement a specified function/action in one or more blocks in the flowcharts and/or the block diagrams.

The flowcharts and the block diagrams in the accompanying drawings display system architectures, functions, and operations that may be implemented by systems, methods, and computer program products according to a plurality of embodiments of the present disclosure. In this case, each block in the flowcharts or the block diagrams may represent a module, a program segment, or a part of the instructions. The module, the program segment, or the part of the instructions includes one or more executable instructions used to implement a specified logical function. In some alternative implementations, functions marked in the blocks may alternatively be implemented in a sequence different from that marked in the accompanying drawings. For example, two consecutive blocks can actually be executed substantially in parallel, or sometimes may be executed in a reverse order, depending on related functions. It will be also noted that each block in the block diagrams and/or the flowcharts, and a combination of blocks in the block diagrams and/or the flowcharts may be implemented by a dedicated hardware-based system that performs a specified function or action, or may be implemented by a combination of dedicated hardware and computer instructions. It is well-known to a person skilled in the art that implementation through hardware, implementation through software, and implementation through a combination of software and hardware are equivalent.

The embodiments of the present disclosure have been described above. The descriptions are examples but not exhaustive, and are not limited to the disclosed embodiments. Many modifications and changes are apparent to a person of ordinary skill in the art without departing from the scope and spirit of the described embodiments. Selection of the terms used in this specification is intended to best explain the principles of the embodiments, actual application, or improvements to the technology in the market, or to enable another person of ordinary skill in the art to understand the embodiments disclosed in this specification. The scope of the present disclosure is defined by the appended claims.

## Claims

1. A vehicle control method, comprising:
obtaining a first temperature of a passenger compartment of a vehicle in response to a first instruction for starting an in-vehicle refrigerator through a cloud service;
determining whether the first temperature is within an operating temperature range of the in-vehicle refrigerator;
controlling, when the first temperature is beyond the operating temperature range, an in-vehicle air conditioner to be turned on, to adjust a temperature of the passenger compartment to be within the operating temperature range; and
controlling, when the first temperature is within the operating temperature range, the in-vehicle refrigerator to be turned on.

2. The method according to claim 1, wherein obtaining the first temperature of the passenger compartment of the vehicle comprises:
obtaining temperature data collected by a temperature sensor of the vehicle in a first specified time; and
determining an average temperature value of the passenger compartment in the first specified time based on the temperature data, and using the average temperature value as the first temperature.

3. The method according to claim 1 or 2, wherein controlling, when the first temperature is beyond the operating temperature range, the in-vehicle air conditioner to be turned on comprises:
when the first temperature is greater than or equal to an upper limit value of the operating temperature range, controlling the in-vehicle air conditioner to run in a cooling mode; and
when the first temperature is less than or equal to a lower limit value of the operating temperature range, controlling the in-vehicle air conditioner to run in a heating mode.

4. The method according to any one of claims 1 to 3, wherein controlling, when the first temperature is beyond the operating temperature range, the in-vehicle air conditioner to be turned on comprises:
when the first temperature is beyond the operating temperature range, determining a temperature difference between the first temperature and the operating temperature range;
determining a first target value of a first running parameter of the in-vehicle air conditioner based on the temperature difference, wherein the first running parameter comprises at least one of a running mode, an air speed, or a running temperature; and
controlling, based on the first target value of the first running parameter, the in-vehicle air conditioner to run.

5. The method according to any one of claims 1 to 4, wherein when the in-vehicle refrigerator is turned on, the method further comprises:
detecting whether there is a person in the passenger compartment;
determining a second target value of a second running parameter of the in-vehicle refrigerator based on a detection result, wherein the second running parameter comprises a compressor rotation speed and/or a fan rotation speed; and
controlling, based on the target value of the second running parameter, the in-vehicle refrigerator to run.

6. The method according to any one of claims 1 to 5, wherein the method further comprises:
controlling, when the in-vehicle refrigerator enters a delayed power-off mode and a second temperature of the passenger compartment is greater than or equal to the upper limit value of the operating temperature range, the in-vehicle air conditioner to be turned on, to decrease the temperature of the passenger compartment;
determining whether time during which the in-vehicle refrigerator enters the delayed power-off mode reaches specified delayed power-off time; and
when the time during which the in-vehicle refrigerator enters the delayed power-off mode reaches the delayed power-off time, controlling the in-vehicle refrigerator to be turned off.

7. The method according to claim 6, wherein controlling, when the in-vehicle refrigerator enters the delayed power-off mode and the second temperature of the passenger compartment is greater than or equal to the upper limit value of the operating temperature range, the in-vehicle air conditioner to be turned on comprises:
when the in-vehicle refrigerator enters the delayed power-off mode and the second temperature is greater than or equal to the upper limit value of the operating temperature range, sending, through the cloud service to a mobile terminal that establishes a connection to the vehicle, a first request for turning on the in-vehicle air conditioner;
when a first response returned by the mobile terminal is received in third specified time after the first request is sent, controlling the in-vehicle air conditioner to be turned on, wherein the first response indicates agreement to turn on the in-vehicle air conditioner; and
when a second response returned by the mobile terminal is received in the third specified time after the first request is sent, or a response returned by the mobile terminal is not received in the third specified time after the first request is sent, controlling the in-vehicle refrigerator to be turned off, wherein the second response indicates disagreement to turn on the in-vehicle air conditioner.

8. The method according to claim 6 or 7, wherein the method further comprises:
controlling, when the in-vehicle refrigerator enters the delayed power-off mode and the second temperature is less than or equal to the lower limit value of the operating temperature range, the in-vehicle refrigerator to be turned off.

9. A vehicle control method, comprising:
controlling, when an in-vehicle refrigerator enters a delayed power-off mode and a second temperature of a passenger compartment of a vehicle is greater than or equal to an upper limit value of an operating temperature range of the in-vehicle refrigerator, an in-vehicle air conditioner to be turned on, to decrease a temperature of the passenger compartment;
determining whether time during which the in-vehicle refrigerator enters the delayed power-off mode reaches specified delayed power-off time; and
when the time during which the in-vehicle refrigerator enters the delayed power-off mode reaches the delayed power-off time, controlling the in-vehicle refrigerator to be turned off.

10. The method according to claim 9, wherein controlling, when the in-vehicle refrigerator enters the delayed power-off mode and the second temperature of the passenger compartment of the vehicle is greater than or equal to the upper limit value of the working temperature range of the in-vehicle refrigerator, the in-vehicle air conditioner to be turned on comprises:
when the in-vehicle refrigerator enters the delayed power-off mode and the second temperature is greater than or equal to the upper limit value of the operating temperature range, sending, through a cloud service to a mobile terminal that establishes a connection to the vehicle, a first request for turning on the in-vehicle air conditioner;
when a first response returned by the mobile terminal is received in third specified time after the first request is sent, controlling the in-vehicle air conditioner to be turned on, wherein the first response indicates agreement to turn on the in-vehicle air conditioner; and
when a second response returned by the mobile terminal is received in the third specified time after the first request is sent, or a response returned by the mobile terminal is not received in the third specified time after the first request is sent, controlling the in-vehicle refrigerator to be turned off, wherein the second response indicates disagreement to turn on the in-vehicle air conditioner.

11. The method according to claim 9 or 10, wherein the method further comprises:
controlling, when the in-vehicle refrigerator enters the delayed power-off mode and the second temperature is less than or equal to a lower limit value of the operating temperature range, the in-vehicle refrigerator to be turned off.

12. The method according to claim 11, wherein controlling, when the in-vehicle refrigerator enters the delayed power-off mode and the second temperature is less than or equal to the lower limit value of the operating temperature range, the in-vehicle refrigerator to be turned off comprises:
when the in-vehicle refrigerator enters the delayed power-off mode and the second temperature is less than or equal to the lower limit value of the operating temperature range, sending, through the cloud service to a mobile terminal that establishes a connection to the vehicle, a second request for turning off the in-vehicle refrigerator; and
when a third response returned by the mobile terminal is received in fourth specified time after the second request is sent, controlling the in-vehicle refrigerator to be turned off, wherein the third response indicates agreement to turn off the in-vehicle refrigerator.

13. The method according to claim 12, wherein the method further comprises:
when a fourth response returned by the mobile terminal is received in the fourth specified time after the second request is sent, or a response returned by the mobile terminal is not received in the fourth specified time after the second request is sent, controlling the in-vehicle air conditioner to be turned on.

14. A controller (6000), comprising:
a processor (6100); and
a memory (6200), wherein
the memory is configured to store a computer program, and the computer program is configured to control the processor to perform the method according to any one of claims 1 to 13.

15. A vehicle (7000), comprising:
an in-vehicle refrigerator (7100);
an in-vehicle air conditioner (7200); and
the controller according to claim 14.

16. A computer-readable storage medium, wherein the computer-readable storage medium stores a computer program, and when the computer program is executed by a processor, the method according to any one of claims 1 to 13 is implemented.
